(19) **Europäisches Patentamt European Patent Office Office européen des brevets**

(11) **EP 1 727 450 B1**

(12) **EUROPEAN PATENT SPECIFICATION**

(45) Date of publication and mention
of the grant of the patent:
**03.06.2009 Bulletin 2009/23**

(51) Int Cl.:
***A47J 31/46*** *(2006.01)*

(21) Application number: **05708921.1**

(22) Date of filing: **03.03.2005**

(86) International application number:
**PCT/IB2005/050785**

(87) International publication number:
**WO 2005/087066 (22.09.2005 Gazette 2005/38)**

(54) **COFFEE MAKER HAVING A PUMP FOR PRESSURIZING WATER THAT IS TRANSPORTED THROUGH THE COFFEE MAKER**

KAFFEEMASCHINE MIT EINER PUMPE ZUR DRUCKBEAUFSCHLAGUNG VON DURCH DIE KAFFEEMASCHINE TRANSPORTIERTEM WASSER

MACHINE A CAFE DOTEE D'UNE POMPE PERMETTANT DE METTRE SOUS PRESSION L'EAU TRANSPORTEE A TRAVERS LA MACHINE A CAFE

(84) Designated Contracting States:
**AT BE BG CH CY CZ DE DK EE ES FI FR GB GR HU IE IS IT LI LT LU MC NL PL PT RO SE SI SK TR**

(30) Priority: **12.03.2004 US 553003 P**

(43) Date of publication of application:
**06.12.2006 Bulletin 2006/49**

(73) Proprietor: **Koninklijke Philips Electronics N.V. 5621 BA Eindhoven (NL)**

(72) Inventors:
• **VAN BAREN, Martijn**
  **NL-5656 AA Eindhoven (NL)**
• **NOORDHUIS, Joeke**
  **NL-5656 AA Eindhoven (NL)**

• **HUNTINK, David, J., T.**
  **NL-5656 AA Eindhoven (NL)**
• **BOUMA, Peter, H.**
  **NL-5656 AA Eindhoven (NL)**
• **SMITT, Hendrik**
  **NL-5656 AA Eindhoven (NL)**

(74) Representative: **Schouten, Marcus Maria Philips Intellectual Property & Standards P.O. Box 220 5600 AE Eindhoven (NL)**

(56) References cited:
**EP-A- 0 607 759         WO-A-93/15640**

**Description**

The present invention relates to a coffee maker, comprising a pump for pressurizing water that is transported through the coffee maker.

It is noted that the term "coffee maker" should be understood to cover all kinds of devices with which at least one cup of coffee or a coffee variant can be obtained, including coffee vending machines and espresso machines.

One known type of coffee maker comprises a brewing chamber in which the coffee is actually made. When a user desires to obtain a cup of coffee, he places a coffee pad comprising an envelope filled with a quantity of ground coffee beans in the brewing chamber. During operation of the coffee maker, a quantity of water is forced through the coffee pad. In the process, the envelope acts as a coffee filter. The interaction between the pressurized water and the coffee pad inside the brewing chamber thus yields the desired cup of coffee. Such a coffee maker is disclosed in the document WO 2001015582 A1.

The coffee maker comprises a boiler for heating the water. The coffee maker comprises a pump for pressurizing the water. The pump, the boiler, and the brewing chamber are interconnected by means of tubes for transporting water.

In order to obtain a predetermined quantity of coffee by means of the known coffee maker, it is important that the pressure in the water is raised to a predetermined level by the pump. Furthermore, both the quantity and the pressure of the water have an influence on the taste of the coffee obtained.

In one embodiment of the known coffee maker, the pump is specified to deliver 136 ml $\pm$ 8 ml water at a pressure of 1.4 bar in the brewing chamber in order to obtain one cup of coffee. In practice, however, it was found that the obtained quantity of coffee is about 124 ml $\pm$ 15 ml in said embodiment. Since the variation of the quantity of coffee is larger than expected, the conclusion is justified that the coffee maker has an undesired unstable performance. In order to overcome this problem of an unstable performance, the present invention proposes a coffee maker of the type as described in the opening paragraph, wherein a length L of a pump tube connected to an outlet side of the pump is in a range of

$$0.3\lambda \text{ to } 0.7\lambda \pm 0.5N\lambda,$$

wherein N is an integer, and wherein $\lambda$ is a wavelength of a wave in the pump tube caused by the pump during operation.

The wavelength $\lambda$ may be experimentally determined, but may also be calculated using the following formula:

$$\lambda = \frac{1}{f}\sqrt{\frac{E}{3\rho}\frac{R_2{}^2 - R_1{}^2}{R_2{}^2}}$$

wherein f is a frequency at which the pump gives pressure pulses, $\rho$ is a density of the water inside the pump tube, E is a modulus of elasticity of material of the pump tube, $R_1$ is an inner diameter of the pump tube, and $R_2$ is an outer diameter of the pump tube.

The present invention is based on the recognition that the unstable performance is related to the type of pump used in the coffee maker and the characteristics of a pump tube connected to an outlet side of the pump. The type of pump used is a piston pump, which gives pressure pulses into the pump tube at a certain frequency f, for example 50 Hz. It appears that these pulses travel through the pump tube like a wave. The pulses are reflected at the end of the pump tube, and are intensified or weakened, depending on the characteristics of the pump tube. Whether the predetermined pressure in the brewing chamber is obtained or not depends on a ratio between the wavelength of the pulse and a length L of the pump tube.

Experiments have shown that a pump tube length L of around $0.25\lambda \pm 0.5N\lambda$, wherein N is an integer leads to a minimum in pressure in the brewing chamber. Furthermore, it was found that the pressure in the brewing chamber is stable if the pump tube length L is in a range of $0.3\lambda$ to $0.7\lambda \pm 0.5N\lambda$.

The present invention will now be explained in greater detail with reference to the Figures, in which similar parts are indicated by the same reference signs, and in which:

Fig. 1 is a block diagram showing various components of a coffee maker;

Figs. 2a-2f diagrammatically illustrate a wave motion in a pump tube of the coffee maker, which tube is located at an outlet side of a pump of the coffee maker;

Fig. 3 is a graph depicting an experimentally determined relation between a pressure in the brewing chamber of the coffee maker and a length of the pump tube;

Fig. 4 is a graph depicting an experimentally determined relation between the pressure in the brewing chamber of the coffee maker and the length of the pump tube, determined at two different pump frequencies; and

Fig. 5 is a graph depicting an experimentally determined relation between the pressure in the brewing chamber of the coffee maker and a ratio between the length of the pump tube and a wavelength in the pump tube.

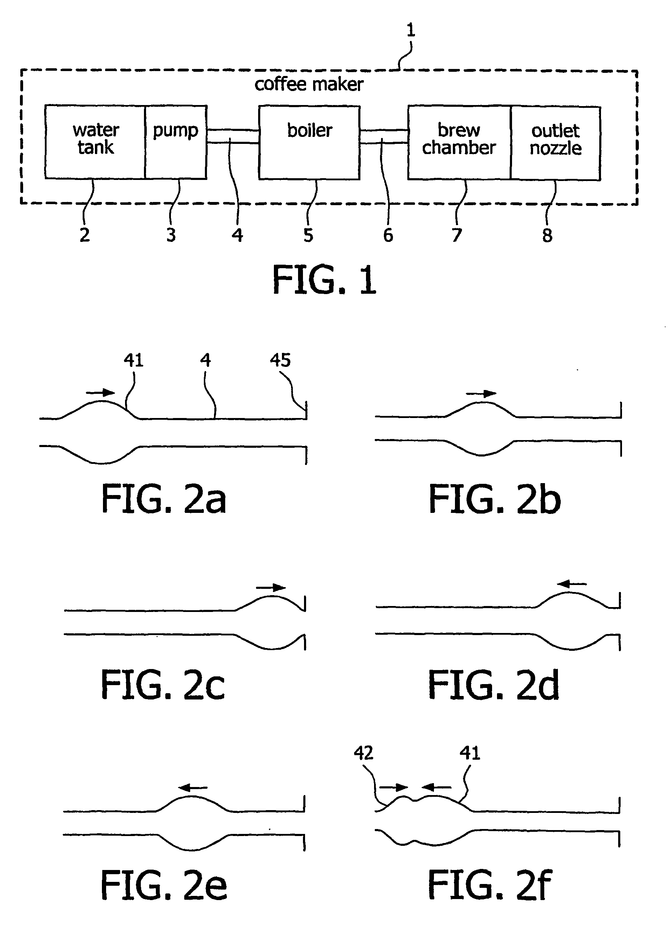

Figure 1 diagrammatically shows various components of a coffee maker 1.

A first component is a water tank 2 for containing water. This water tank 2 may be shaped in any suitable way. Preferably, the water tank 2 is detachably arranged, so that a user is capable of taking the water tank 2 to a tap or the like in order to fill the water tank 2 without having to move the entire coffee maker 1. The present invention also pertains to coffee makers which do not comprise a water tank but are connected to some kind of water supplying system through a suitable closing device, such as a tap.

A second component is a pump 3 for forcing the water to flow through the coffee maker 1. The pump 3 may be of any suitable type, and may be a piston pump, for example. A piston pump is a well-known type of pump, which comprises a piston accommodated inside a housing, such that piston is linearly displaceable with respect to the housing. During operation of the pump, the piston is moved with respect to the housing in a reciprocating manner with a certain frequency f, for example 50 Hz.

A third component is a boiler 5 for heating the water. The boiler 5 may be of any suitable type. The boiler 5 and the pump 3 are interconnected by means of a pump tube 4. When the pump 3 is operated, the water is forced to flow from the pump 3 through the pump tube 4 to the boiler 5. The pump tube 4 acts as an outlet tube of the pump 3. In the shown example, the pump tube 4 also acts as an inlet tube of the boiler 5.

A fourth component is a brewing chamber 7. The brewing chamber 7 and the boiler 5 are interconnected by means of a boiler tube 6. The brewing chamber 7 is adapted to accommodate at least one coffee pad. During operation, the actual process of making coffee takes place inside the brewing chamber 7, as it is in the brewing chamber 7 that the water is forced to flow through the coffee pad.

A fifth component is an outlet nozzle 8, which is directly connected to the brewing chamber 7 and which serves for delivering freshly brewed coffee from the coffee maker 1.

The way in which a cup of coffee is made by means of the coffee maker 1 may be as follows:

1) A user fills the water tank 2 with water. In the process, the user needs to take care that the quantity of water in the water tank 2 is at least the quantity of water needed for making the cup of coffee.

2) The user places a coffee pad in the brewing chamber 7. The coffee maker 1 may comprise, for example, a separate carrier for receiving the coffee pad which can be easily inserted in the brewing chamber 7.

3) The user places a coffee cup in the proper position for receiving coffee from the coffee maker 1.

4) The user activates the boiler 5, in which a quantity of water is already present. The water is heated to a predetermined temperature inside the boiler 5.

5) The user activates the pump 3 to force the hot water to flow from the boiler 5 to the brewing chamber 7. Inside the brewing chamber 7, the hot water is pressed through the coffee pad, so that coffee is obtained. The freshly brewed coffee is forced to flow from the brewing chamber 7 to the coffee cup located outside the coffee maker 1, through the outlet nozzle 8. During operation of the pump 3, water is forced to flow from the water tank 2 to the boiler 5, so that the boiler remains filled with a predetermined quantity of water, of which at least a portion may be used a next time the coffee maker 1 is operated.

For completeness' sake, it is noted that the above-described process of making a cup of coffee using the coffee maker 1 is just one example of the many existing possibilities for this process.

It is important that the performance of the coffee maker 1 is stable, which implies that the obtained quantity of coffee has to be within a specified range, and that the pressure in the brewing chamber 7 has to reach a specified level.

According to a recognition underlying the present invention, a relationship between several characteristics related to the pump 3, the pump tube 4, and the water has an important influence on the stability of the performance of the coffee maker 1. In particular, a relationship between a length L of the pump 3, a frequency f with which the pump 3 gives pressure pulses, a density $\rho$ of the water, a modulus of elasticity E of material of the pump tube 4, an inner diameter $R_1$ of the pump tube 4, and an outer diameter $R_2$ of the pump tube 4 has to be within specified limits in order for the performance of the coffee maker 1 to be stable. An explanation for the influence of the characteristics mentioned is found in the insight into a process which takes place in the pump tube 4. This process is illustrated by Figures 2a-2f.

When the pump 3 is operated, it gives pressure pulses with a specified frequency f. These pulses are found to travel through the pump tube 4 like a wave. Figures 2a-2f, diagrammatically show waves, a direction of movement of the waves being indicated by an arrow.

Figures 2a and 2b diagrammatically show a first wave 41 which is heading towards an end 45 of the pump tube 4. Figure 2c diagrammatically shows the first wave 41 in a location right at the end 45 of the pump tube 4. In this location the first wave 41 is reflected, as a result of which it starts moving in an opposite direction. Figure 2d diagrammatically shows a reflected first wave 41 which has just left the end 45 of the pump tube 4 and which is moving away from this end 45, and Figure 2e diagrammatically shows the first wave 41 in a location somewhat further from the end 45. In Figure 2f shows a second wave 42 which moves towards the end 45 of the pump tube 4 and encounters the first wave 41, which is moving in an opposite direction. Depending on the tube characteristics, the waves 41, 42 are intensified or weakened as a result of their encounter. In particular, the result of the encounter between reflected waves 41, 42 in the pump tube 4 is influenced by a ratio between a wavelength λ of the waves 41, 42 and the length L of the pump tube 4.

According to the theory of hydrodynamics, the wavelength λ is given by the following formula:

$$\lambda = \frac{1}{f}\sqrt{\frac{E}{3\rho}\frac{R_2{}^2 - R_1{}^2}{R_2{}^2}}$$

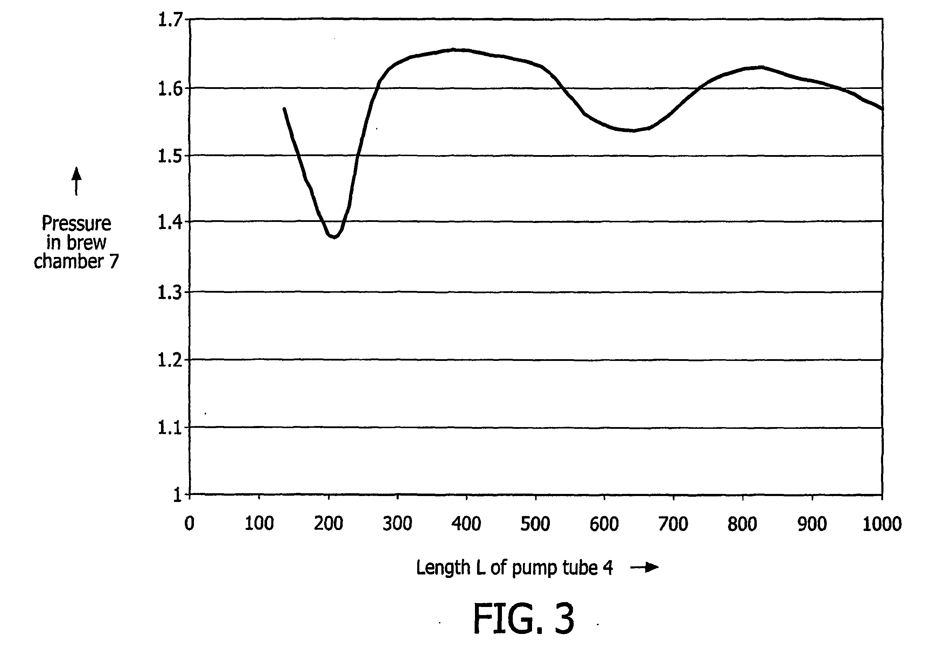

A relation between a pressure in the brewing chamber 7 and the length L of the pump tube 4 has been determined in experiments performed in the context of the present invention. The graphs shown in Figures 3-5 are based on results of these experiments.

In the graph of Figure 3, the pressure is plotted as a function of the length L of the pump tube 4. It will be clear that the results on which this graph is based are obtained by varying the length L of the pump tube 4 and measuring the associated pressure prevailing inside the brewing chamber 7, while keeping all other characteristics of the pump 3, the pump tube 4, and the water constant, in other words, while keeping the wavelength λ constant. The shown values of the pressure in the brewing chamber 7 and the length L of the pump tube 4 are obtained for a pump tube 4 having a hardness of 60 shore, an inner diameter $R_1$ of 2 mm, and an outer diameter $R_2$ of 4 mm at a pump frequency f of 50 Hz. Under these circumstances, the wavelength λ was found to be around 880 mm. It will be understood that the combination of values mentioned is just one of the many existing possibilities.

The graph as shown in Figure 3 clearly illustrates that the pressure does not remain at one constant level when the length L of the pump tube 4 is varied. On the contrary, alternately occurring unstable regions and stable regions are distinguishable. In an unstable region, the pressure varies strongly when the pump tube length L is varied, whereas in a stable region the pressure remains substantially at a constant level when the pump tube length L is varied, in other words, the pressure seems independent of the pump tube length L. It is important that the pump tube length L is chosen such that the relation between the pressure and this pump tube length L is in the stable region, in order to guarantee that a predetermined pressure is obtained in the brewing chamber 7. If said relation is in the unstable region, then there is a considerable risk that the pressure will not be high enough.

The unstable region and the stable region alternate with each other such that a first unstable region is followed by a first stable region, the first stable region is followed by a second unstable region, the second unstable region is followed by a second stable region, etc. A first unstable region extends around a point where the pump tube length L equals 215 mm and where the pressure is more or less at a minimum. A second unstable region extends around a point where the pump tube length L equals 640 mm. In order to avoid an unstable and unpredictable performance of the coffee maker 1, the pump tube length L should be chosen so as to be outside the unstable regions.

Furthermore, the graph shows that a first stable region extends from a point where the pump tube length L approximately equals 280 mm to a point where the pump tube length L approximately equals 510 mm. Between these points, a variation in the pressure is small and allowable.

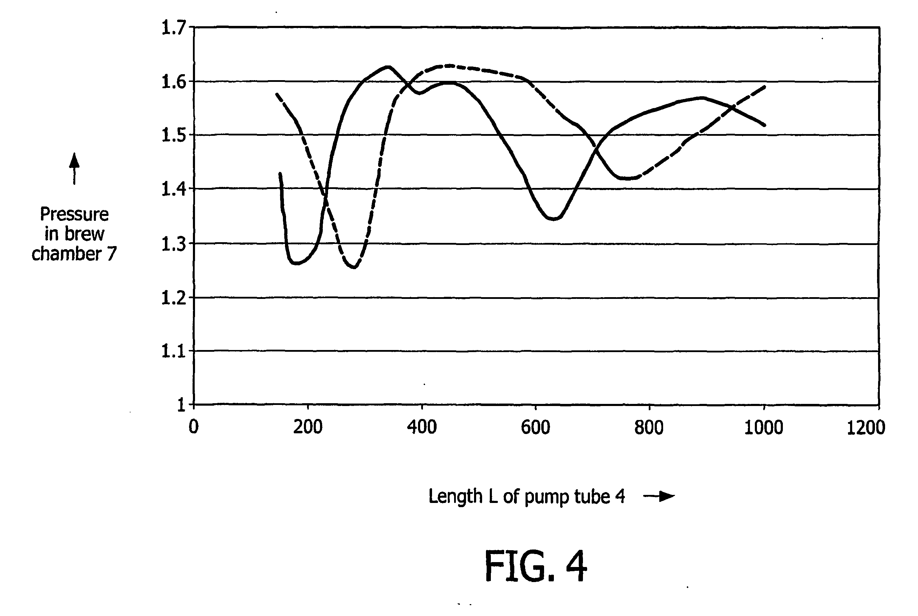

For completeness' sake, it is remarked that the values of the pump tube length L mentioned in the preceding paragraphs are associated with a pump tube 4 having a hardness of 60 shore, an inner diameter $R_1$ of 2 mm, an outer diameter $R_2$ of 4 mm, and with a pump frequency f of 50 Hz. If at least one of these characteristics is varied, the relation between the pressure and the pump tube length L is changed. This phenomenon is illustrated by Figure 4. The graph shown in this Figure represents an experimentally obtained relation between the pressure and the pump tube length L for two different pump frequencies, i.e. 50 Hz and 60 Hz. A broken line relates to the pump frequency f of 50 Hz and a full line to the pump frequency f of 60 Hz.

The shown values of the pressure in the brewing chamber 7 and the pump tube length L are obtained for a pump tube 4 having a hardness of 69 shore, an inner diameter $R_1$ of 2 mm, and an outer diameter $R_2$ of 4 mm. It will be clear that the shown values are obtained by varying the length L of the pump tube 4 and measuring the associated pressure prevailing inside the brewing chamber 7 at two different levels of the pump frequency f, while all other characteristics of the pump 3, the pump tube 4, and the water are kept constant.

Figure 4 clearly illustrates the influence of a variation of the value of one characteristic, in this case the pump frequency f, on the relation between the pressure in the brewing chamber 7 and the length L of the pump tube 4. For example, at a pump tube length L of about 300 mm and a pump frequency f of 50 Hz, the relation between the pressure and the pump tube length L is in an unstable region, whereas said relation is in a stable region at a pump frequency f of 60 Hz.

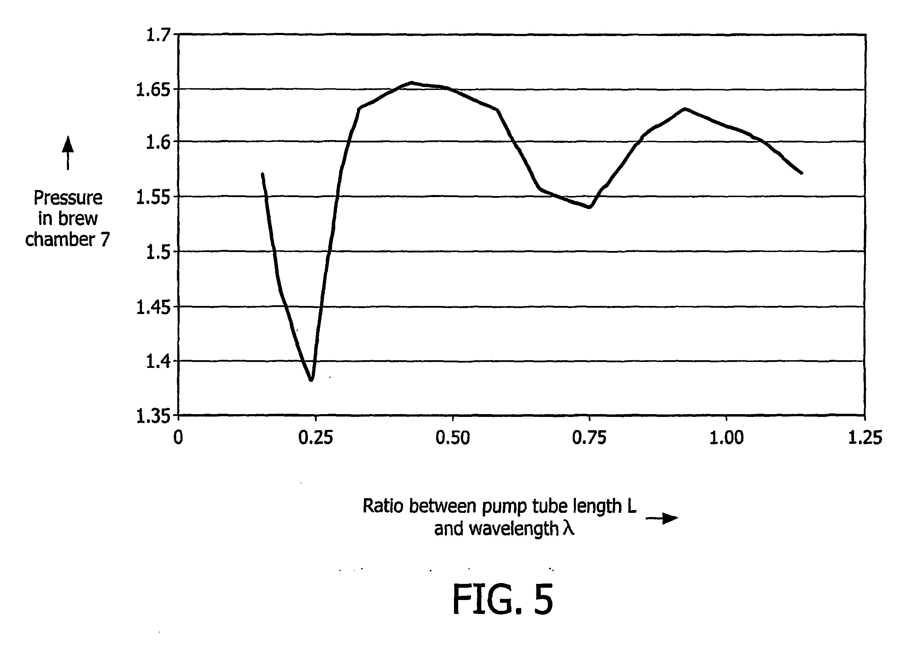

Figure 5 is a graph based on the graphs of Figures 3 and 4. A difference between the several graphs is that the graphs of Figures 3 and 4 illustrate a relation between the pressure in the brewing chamber 7 and the length L of the pump tube 4, whereas the graph of Figure 5 illustrates a relation between the pressure in the brewing chamber 7 and a ratio between the length L of the pump tube 4 and the wavelength λ in the pump tube 4. All graphs are based on experiments in which the length L of the pump tube 4 is varied and the associated pressure in the brewing chamber 7 is measured, and since the wavelength λ is not influenced by a variation of the length L of the pump tube 4, the shape of the curve shown in Figure 5 corresponds to the shape of the curves shown in Figures 3 and 4.

The shown relation between the pressure in the brewing chamber 7 and the ratio between the length L of the pump tube 4 and the wavelength $\lambda$ in the pump tube 4 has been determined using a pump tube 4 having a hardness of 60 shore, an inner diameter $R_1$ of 2 mm, an outer diameter $R_2$ of 4 mm, and a pump frequency f of 50 Hz. For completeness' sake, it is remarked that this relation is not only valid under these specific circumstances, but also when a pump tube 4 having different characteristics is applied and/or the pump frequency f is different. The ratio between the length L of the pump tube 4 and the wavelength $\lambda$ determines the obtained pressure in the brewing chamber 7, regardless of the exact values of these lengths L, $\lambda$, and regardless of the exact values of the determining factors of the wavelength $\lambda$.

The graph as shown in Figure 5 illustrates inter alia that the pattern of stable regions and unstable regions is repeated every $0.5\lambda$. Furthermore, the graph shows that a first unstable region extends around a point where the pump tube length L equals $0.25\lambda$ and where the pressure is more or less at a minimum. A second unstable region extends around a point where the pump tube length L equals $0.75\lambda$, a third unstable region extends around a point where the pump tube length L equals $1.25\lambda$, etc.

Furthermore, the graph shows that a first stable region extends from a point where the pump tube length L approximately equals $0.3\lambda$ to a point where the pump tube length L approximately equals $0.7\lambda$. Between these points, a variation of the pressure is small and allowable. Like the unstable region, the stable region is repeated every $0.5\lambda$. Therefore, for example, a second stable region extends from a point where the pump tube length L approximately equals $0.8\lambda$ to a point where the pump tube length L approximately equals $1.2\lambda$.

The pressure prevailing in the brewing chamber 7 is even more predictable if the length L of the pump tube 4 is within a range of $0.33\lambda$ to $0.65\lambda \pm 0.5N\lambda$. Therefore, in a preferred embodiment of the coffee maker 1, the length L of the pump tube 4 is chosen so as to be within this range of $0.33\lambda$ to $0.65\lambda \pm 0.5N\lambda$. In a more preferred embodiment, the length L of the pump tube 4 is within a range of $0.35\lambda$ to $0.55\lambda \pm 0.5N\lambda$. In an even more preferred embodiment, the length L of the pump tube 4 is within a range of $0.38\lambda$ to $0.57\lambda \pm 0.5N\lambda$.

An embodiment of the coffee maker 1 in which the length L of the pump tube 4 is chosen so as to be the length at which the pressure in the brewing chamber 7 is at a maximum is also covered by the present invention. This length L is within a range of $0.4\lambda$ to $0.45\lambda \pm 0.5N\lambda$. If some variation of the pressure is allowed, it is not necessary to determine the length L of the pump tube 4 very accurately, and the length L may be at a value lower than $0.4\lambda$ or a value higher than $0.45\lambda$. Preferably, if the length L has a lower value, this value is within a range of $0.35\lambda$ to $0.4\lambda \pm 0.5N\lambda$. Preferably, if the length L has a higher value, this value is within a range of $0.45\lambda$ to $0.55\lambda \pm 0.5N\lambda$.

Summarizing, alternately occurring unstable regions and stable regions are distinguishable in the graphs shown in Figures 3 and 4, by means of which an experimentally determined relation between the pressure in the brewing chamber 7 and the length L of the pump tube 4 is illustrated, and in the graph shown in Figure 5, by means of which an experimentally determined relation between the pressure in the brewing chamber 7 and the ratio between the length L of the pump tube 4 and the wavelength $\lambda$ is illustrated. In the unstable region, the pressure varies strongly when the pump tube length L is varied, whereas in the stable region the pressure remains substantially at a constant level when the pump tube length L is varied.

In order for the performance of the coffee maker 1 to be stable and predictable, the combination of various factors determining the wavelength $\lambda$ and the length L of the pump tube 4 should be chosen so as to be within a stable region, so that any minor disturbance will not lead to an unacceptable pressure deviation. According to the present invention, this is the case if the length L is within a range of $0.3\lambda$ to $0.7\lambda \pm 0.5\lambda$.

In the foregoing, a coffee maker 1 is disclosed, which comprises a pump 3 for pressurizing water and a pump tube 4 connected to an outlet side of the pump 3. Furthermore, the coffee maker 1 comprises a brewing chamber 7 which is adapted to accommodate a coffee pad. During operation of the coffee maker 1, the water is heated and pressed through a coffee pad. In this way, coffee is obtained.

In order for the performance of the coffee maker 1 to be stable, it is important that a predetermined pressure is obtained in the brewing chamber 7. It was found that the stability of the performance of the coffee maker 1 is dependent on a ratio between a length L of the pump tube 4 and a wavelength $\lambda$ of a wave 41, 42 caused by the pump 3 in the pump tube 4 during operation. If said ratio is within a range of 0.3 to $0.7 \pm 0.5N$, wherein N is an integer, the performance of the coffee maker 1 is stable. However, if the ratio is outside this range, the performance of the coffee maker 1 is unstable.

It will be clear to those skilled in the art that the scope of the present invention is not limited to the examples discussed in the foregoing, but that several amendments and modifications thereof are possible without deviating from the scope of the present invention as defined in the attached claims.

**Claims**

1. Coffee maker (1), comprising a pump (3) for pressurizing water that is transported through the coffee maker (1), wherein a length L of a pump tube (4) connected to an outlet side of the pump (3) is in a range of

$$0.3\lambda \text{ to } 0.7\lambda \pm 0.5N\lambda,$$

wherein N is an integer, and wherein $\lambda$ is a wavelength of a wave (41, 42) in the pump tube (4) caused by the pump (3) during operation.

2. Coffee maker (1) according to claim 1, wherein the wavelength $\lambda$ is calculated according to the following formula:

$$\lambda = \frac{1}{f}\sqrt{\frac{E}{3\rho}\frac{R_2^2 - R_1^2}{R_2^2}}$$

wherein f is a frequency at which the pump (3) gives pressure pulses, $\rho$ is a density of the water inside the pump tube (4), E is a modulus of elasticity of material of the pump tube (4), $R_1$ is an inner diameter of the pump tube (4), and $R_2$ is an outer diameter of the pump tube (4).

3. Coffee maker (1) according to claim 1, wherein the length L of the pump tube (4) is within a range of $0.33\lambda$ to $0.65\lambda \pm 0.5N\lambda$.

4. Coffee maker (1) according to claim 1, wherein the length L of the pump tube (4) is within a range of $0.35\lambda$ to $0.55\lambda \pm 0.5N\lambda$.

5. Coffee maker (1) according to claim 1, wherein the length L of the pump tube (4) is within a range of $0.38\lambda$ to $0.5\lambda \pm 0.5N\lambda$.

6. Coffee maker (1) according to claim 1, wherein the length L of the pump tube (4) is within a range of $0.4\lambda$ to $0.45\lambda \pm 0.5N\lambda$.

7. Coffee maker (1) according to claim 1, wherein the length L of the pump tube (4) is within a range of $0.35\lambda$ to $0.4\lambda \pm 0.5N\lambda$.

8. Coffee maker (1) according to claim 1, wherein the length L of the pump tube (4) is within a range of $0.45\lambda$ to $0.55\lambda \pm 0.5N\lambda$.

9. Method of manufacturing a coffee maker (1), comprising the following steps:

 - providing a pump (3) which is adapted to give pressure pulses with a frequency f; and
 - providing a pump tube (4) which is intended to be connected to an outlet side of the pump (3), wherein a length L of the pump tube (4) is chosen to be in a range of

$$0.3\lambda \text{ to } 0.7\lambda \pm 0.5N\lambda,$$

wherein N is an integer, and wherein $\lambda$ is a wavelength of a wave (41, 42) in the pump tube (4) caused by the pump (3) when the pump (3) is operated.

10. Method according to claim 9, wherein the wavelength $\lambda$ is calculated according to the following formula:

$$\lambda = \frac{1}{f}\sqrt{\frac{E}{3\rho}\frac{R_2^2 - R_1^2}{R_2^2}}$$

wherein f is a frequency at which the pump (3) is to give pressure pulses when the pump (3) is operated, $\rho$ is a density of the water to be used in the coffee maker (1), E is a modulus of elasticity of material of the pump tube (4), $R_1$ is an inner diameter of the pump tube (4), and $R_2$ is an outer diameter of the pump tube (4).

**Patentansprüche**

1. Kaffeemaschine (1), mit einer Pumpe (3), um Wasser, das durch die Kaffeemaschine (1) hindurch befördert wird, unter Druck zu setzen, wobei eine Länge L eines mit einer Auslassseite der Pumpe (3) verbundenen Pumpenrohres (4) in einem Bereich von

$$0,3\lambda \text{ bis } 0,7\lambda \pm 0,5N\lambda,$$

liegt, wobei N eine ganze Zahl ist und wobei $\lambda$ eine Wellenlänge einer in dem Pumpenrohr (4) von der Pumpe (3) beim Betrieb verursachten Welle (41, 42) ist.

2. Kaffeemaschine (1) nach Anspruch 1, bei der die Wellenlänge $\lambda$ entsprechend der folgenden Formel berechnet wird:

$$\lambda = \frac{1}{f}\sqrt{\frac{E}{3\rho}\frac{R_2^2 - R_1^2}{R_2^2}}$$

wobei f eine Frequenz ist, mit der die Pumpe (3) Druckimpulse gibt, $\rho$ eine Dichte des Wassers innerhalb des Pumpenrohres (4), E ein Elastizitätsmodul von Material des Pumpenrohres (4), $R_1$ ein Innendurchmesser des Pumpenrohres (4) und $R_2$ ein Au-

ßendurchmesser des Pumpenrohres (4).

**3.** Kaffeemaschine (1) nach Anspruch 1, bei der die Länge L des Pumpenrohres (4) in einem Bereich von 0,33λ bis 0,65λ ± 0,5Nλ liegt.

**4.** Kaffeemaschine (1) nach Anspruch 1, bei der die Länge L des Pumpenrohres (4) in einem Bereich von 0,35λ bis 0,55λ ± 0,5Nλ liegt.

**5.** Kaffeemaschine (1) nach Anspruch 1, bei der die Länge L des Pumpenrohres (4) in einem Bereich von 0,38λ bis 0,5λ ± 0,5Nλ liegt.

**6.** Kaffeemaschine (1) nach Anspruch 1, bei der die Länge L des Pumpenrohres (4) in einem Bereich von 0,4λ bis 0,45λ ± 0,5Nλ liegt.

**7.** Kaffeemaschine (1) nach Anspruch 1, bei der die Länge L des Pumpenrohres (4) in einem Bereich von 0,35λ bis 0,4λ ± 0,5Nλ liegt.

**8.** Kaffeemaschine (1) nach Anspruch 1, bei der die Länge L des Pumpenrohres (4) in einem Bereich von 0,45λ bis 0,55λ ± 0,5Nλ liegt.

**9.** Verfahren zum Herstellen einer Kaffeemaschine (1), das folgende Schritte umfasst:

- Verschaffen einer Pumpe (3), die ausgebildet ist, Druckimpulse mit einer Frequenz f zu geben; und
- Verschaffen eines Pumpenrohres (4), das mit einer Auslassseite der Pumpe (3) verbunden werden soll, wobei eine Länge L des Pumpenrohres (4) so gewählt wird, dass es in einem Bereich von

$$0,3\lambda \text{ bis } 0,7\lambda \pm 0,5N\lambda,$$

liegt, wobei N eine ganze Zahl ist und wobei λ eine Wellenlänge einer in dem Pumpenrohr (4) von der Pumpe (3) beim Betrieb der Pumpe (3) verursachten Welle (41, 42) ist.

**10.** Verfahren nach Anspruch 9, bei dem die Wellenlänge λ entsprechend der folgenden Formel berechnet wird:

$$\lambda = \frac{1}{f} \sqrt{\frac{E}{3\rho} \frac{R_2{}^2 - R_1{}^2}{R_2{}^2}}$$

wobei f eine Frequenz ist, mit der die Pumpe (3) beim Betrieb der Pumpe (3) Druckimpulse gibt, ρ eine Dichte des in der Kaffeemaschine (1) zu verwendenden Wassers, E ein Elastizitätsmodul von Material des Pumpenrohres (4), $R_1$ ein Innendurchmesser des Pumpenrohres (4) und $R_2$ ein Außendurchmesser des Pumpenrohres (4) ist.

**Revendications**

**1.** Cafetière (1) comprenant une pompe (3) pour la mise sous pression de l'eau qui est transportée à travers la cafetière (1) dans laquelle une longueur L d'un tube de pompe (4) qui est relié à un côté de sortie de la pompe (3) se situe dans la gamme comprise entre

$$0,3\lambda \text{ et } 0,7\lambda \pm 0,5N\lambda$$

dans laquelle N est un nombre entier et dans laquelle λ est une longueur d'onde d'une onde (41, 42) dans le tube de pompe (4) qui est causée par la pompe (3) pendant le fonctionnement.

**2.** Cafetière (1) selon la revendication 1, dans laquelle la longueur d'onde λ est calculée selon la formule suivante:

$$\lambda = \frac{1}{f} \sqrt{\frac{E}{3\rho} \frac{R_2{}^2 - R_1{}^2}{R_2{}^2}}$$

dans laquelle f est une fréquence à laquelle la pompe (3) donne des impulsions de pression, ρ est une densité de l'eau à l'intérieur du tube de pompe (4), E est un module d'élasticité du matériau du tube de pompe (4), $R_1$ est un diamètre intérieur du tube de pompe (4) et $R_2$ est un diamètre extérieur du tube de pompe (4).

**3.** Cafetière (1) selon la revendication 1, dans laquelle la longueur L du tube de pompe (4) se situe dans une gamme comprise entre 0,33λ et 0,65λ ± 0,5Nλ,

**4.** Cafetière (1) selon la revendication 1, dans laquelle la longueur L du tube de pompe (4) se situe dans une gamme comprise entre 0,35λ et 0,55λ ± 0,5Nλ,

**5.** Cafetière (1) selon la revendication 1, dans laquelle la longueur L du tube de pompe (4) se situe dans une gamme comprise entre 0,38λ et 0,5λ ± 0,5Nλ,

**6.** Cafetière (1) selon la revendication 1, dans laquelle la longueur L du tube de pompe (4) se situe dans une gamme comprise entre 0,4λ et 0,45λ ± 0,5Nλ,

7. Cafetière (1) selon la revendication 1, dans laquelle la longueur L du tube de pompe (4) se situe dans une gamme comprise entre 0,35λ et 0,4λ ± 0,5Nλ,

8. Cafetière (1) selon la revendication 1, dans laquelle la longueur L du tube de pompe (4) se situe dans une gamme comprise entre 0,45λ et 0,55λ ± 0,5Nλ.

9. Procédé de fabrication d'une cafetière (1), comprenant les étapes suivantes consistant à:

   - fournir une pompe (3) qui est adaptée de manière à donner des impulsions de pression avec une fréquence f; et
   - fournir un tube de pompe (4) qui est destiné à être relié à un côté extérieur de la pompe (3) dans laquelle une longueur L du tube de pompe (4) est choisie de manière à se situer dans une gamme comprise entre

$$0,3\lambda \text{ et } 0,7\lambda \pm 0,5N\lambda$$

   dans laquelle N est un nombre entier et dans laquelle λ est une longueur d'onde d'une onde (41, 42) dans le tube de pompe (4) qui est causée par la pompe (3) lorsque la pompe (3) est actionnée.

10. Procédé selon la revendication 9, dans lequel la longueur d'onde λ est calculée selon la formule suivante:

$$\lambda = \frac{1}{f}\sqrt{\frac{E}{3\rho}}\,\frac{R_2^{\,2} - R_1^{\,2}}{R_2^{\,2}}$$

   dans laquelle f est une fréquence à laquelle la pompe (3) doit donner des impulsions de pression lorsque la pompe (3) est actionnée, ρ est une densité de l'eau à utiliser dans la cafetière (1), E est un module d'élasticité du matériau du tube de pompe (4), $R_1$ est un diamètre intérieur du tube de pompe (4) et $R_2$ est un diamètre extérieur du tube de pompe (4).

coffee maker

| water tank | pump | | boiler | | brew chamber | outlet nozzle |

**FIG. 1**

41    4    45

**FIG. 2a**

**FIG. 2b**

**FIG. 2c**

**FIG. 2d**

**FIG. 2e**

42    41

**FIG. 2f**

FIG. 3

Pressure
in brew
chamber 7

1.7

1.6

1.5

1.4

1.3

1.2

1.1

1

0    200    400    600    800    1000    1200

Length L of pump tube 4 →

FIG. 4

FIG. 5

EP 1 727 450 B1

**EP 1 727 450 B1**

## REFERENCES CITED IN THE DESCRIPTION

### Patent documents cited in the description

- WO 2001015582 A1